# EUROPEAN PATENT SPECIFICATION

(11) **EP 2 556 242 B1**
(45) Date of publication and mention of the grant of the patent: **21.01.2015**
(21) Application number: 10730491.7
(22) Date of filing: 14.07.2010
(51) Int. Cl.: F03D 1/00, B63B 35/00, G06Q 10/00

(54) **METHOD FOR INSTALLING AN OFFSHORE WIND FARM**
VERFAHREN ZUR INSTALLATION EINES OFFSHORE-WINDPARKS
PROCÉDÉ D'INSTALLATION D'UN PARC ÉOLIEN OFFSHORE

(30) Priority: 06.04.2010 US 321219 P
(43) Date of publication of application: 13.02.2013
(73) Proprietor: MHI Vestas Offshore Wind A/S, 8200 Aarhus N (DK)
(72) Inventor: BOTWRIGHT, Adrian, DK-8471 Sabro (DK)
(74) Representative: Irons, Mark David
(86) International application number: PCT/EP2010/060139
(87) International publication number: WO 2011/124270

(56) References cited:
- WO-A1-03/066426
- WO-A2-2010/026555
- DE-A1-102008 046 360
- NL-A- 7 703 249
- US-A1- 2004 262 926

## Description

### Technical field of the invention

The present invention relates to a method for installing a wind farm at an offshore site. More particularly, the present invention relates to a method of installing a wind farm using a system of dedicated feeder vessels and special installation vessels designed to receive the feeder vessels.

### Background

Wind turbines have long been used to convert the kinetic energy of the wind into mechanical energy that rotates a generator, thereby producing electricity. Over time, there has been a significant increase in the overall size of these machines because of the desire to capture more of the wind's available energy and thereby produce more power. This trend is particularly apparent in the offshore market, which is where today's largest wind turbines exist. Offshore wind turbines rated in the 5MW range already exist, and there are plans for wind turbines with even greater power outputs in the near future.

The increased size and weight of the components for these wind turbines presents significant challenges in terms of transportation, installation, and other related aspects. For example, conventional approaches to erecting an offshore wind farm typically involve selecting a pre-assembly port to support the wind farm. The port is preferably close to the intended site of the wind farm to minimize the amount of transit time for installation vessels, thereby allowing the installation vessels to be used more for their intended purpose of erecting the wind turbines. The components are shipped to the port from production facilities located elsewhere. But the number of ports able to accommodate these operations is becoming limited.

First, it can be difficult to find a port with sufficient space to accommodate the number of components supporting an offshore wind farm (which can sometimes involve more than 100 wind turbines). The increasing size and weight of wind turbine components is making this even more difficult. Second, even if there is space, the port must still be made ready to carry out the intended operations. These operations might include: receiving the wind turbine components in the manner they are shipped (e.g., by vessel, rail, and/or road), handling the components to make them ready for erection (i.e., pre-assembly), and transferring the components to installation vessels. Considerable time and effort is required to provide all the port facilities necessary for these operations, and only a limited number of locations can support them. With the advent of significantly larger wind turbines-and their increased weights-the operations are likely to become even more costly and difficult to support. For example, locating a port suitable for crane operations and resultant ground loading when lifting nacelles weighing several hundred tones will likely require significant ground improvement works.

An installation vessel for transporting turbines to an installation site is known from US2004/262926A in which the turbines are taken directly to the site in an assembled condition.

Therefore, new approaches for installing offshore wind farms to address these and other challenges are desirable.

### Summary of the invention

It is an object of the present invention to wholly or partly overcome the above disadvantages and drawbacks of the prior art and to provide a method for installing a wind farm at an offshore site.

The above objects, together with numerous other objects, advantages, and features which will become evident from the below description, are accomplished by a method of installing a wind farm at an offshore site, comprising loading wind turbine components onto feeder vessels at a hub port; transporting the feeder vessels loaded with the wind turbine components to a satellite port; docking a first one of the feeder vessels to an installation vessel at the satellite port; transporting the installation vessel and the first feeder vessel to the offshore site; and using the installation vessel to at least partially erect one or more wind turbines from the wind turbine components on the first feeder vessel at the offshore site.

In particular, major operations may be concentrated at the hub ports, which may support a number of wind farm developments, such that only minor operations need to be completed at the satellite ports, which may support a smaller number of (or individual) wind farm developments. The number of locations able to serve as satellite ports is greater than the number able to serve as conventional pre-assembly ports because of the reduced operations necessary at the satellite ports. As a result, the satellite ports can likely be located closer to wind farm developments so that the installation vessels spend less time in transit. Furthermore, the hub ports can be constructed with longer-term goals in mind, thereby justifying increased investment. They may even encompass manufacturing facilities for the wind turbine components in addition to assembly and storage quays.

The method may further comprise the steps of transporting the installation vessel and first feeder vessel from the offshore site back to the satellite port without the wind turbine components on the first feeder vessel; releasing the first feeder vessel from the installation vessel at the satellite port; docking a second one of feeder vessels into the installation vessel at the satellite port; transporting the installation vessel and second feeder vessel to the offshore site; and using the installation vessel to continue erecting the one or more wind turbines at the offshore site, now from the wind turbine components on the second feeder vessel. Hereby a continuous process for installing wind turbines is obtained, which minimises the time it takes to install a wind farm offshore.

The first feeder vessel may remain docked within the installation vessel at the offshore site when erecting the one or more wind turbines. The installation vessel may also be used more like a conventional vessel by docking an empty feeder vessel into the installation vessel, with the empty feeder vessel then remaining in situ to act as conventional deck space on which components can be loaded in the conventional way.

In another aspect or embodiment, using the installation vessel to erect one or more wind turbines further comprises deploying jack-up legs on the installation vessel at the offshore site to raise the installation vessel relative to the water, whereby the installation vessel substantially is independent of the weather conditions, i.e. wave height and current, and can be exactly positioned at the installation site.

The invention also relates to a method of installing a wind farms at multiple offshore sites, comprising (a) loading wind turbine components onto feeder vessels at a hub port; (b) transporting a first group of the feeder vessels to a first satellite port after they have been loaded with wind turbine components; and (c) installing a first wind farm at a first offshore site. The latter step is performed by: (i) docking a feeder vessel of the first group of feeder vessels to a first installation vessel at the first satellite port; (ii) transporting the first installation vessel and the docked feeder vessel to the first offshore site; (iii) using the first installation vessel to at least partially erect one or more wind turbines from the wind turbine components on the docked feeder vessel at the first offshore site; (iv) transporting the first installation vessel and docked feeder vessel from the first offshore site back to the first satellite port without the wind turbine components on the docked feeder vessel; (v) releasing the docked feeder vessel from the first installation vessel at the first satellite port; and (vi) repeating (i) - (v) with other feeder vessels from the first group of feeder vessels to complete installation of the first wind farm. The method further comprises (d) transporting a second group of the feeder vessels to a second satellite port after they have been loaded with wind turbine components, the second satellite port being located closer to the second offshore site compared the first satellite port; and (e) installing a second wind farm at the second offshore site by performing step (c) with a second installation vessel and the second group of feeder vessels.

Additionally, the invention relates to an installation vessel, not forming part of the claimed subject matter, for erecting a wind farm at an offshore site from wind turbine components that have been loaded onto feeder vessels. The installation vessel comprises a loading dock defining a holding area with an open end; ballasting equipment configured to raise and lower the loading dock relative to the water, the loading dock being configured to receive one of the feeder vessels within the holding area; a propulsion system configured to drive the installation vessel to the offshore site; jack-up legs movable between undeployed and deployed positions, the jack-up legs being configured raise the installation vessel above the water; and at least one lift crane configured to at least partially erect one or more wind turbines from the wind turbine components on a feeder vessel within the holding area.

Finally, the invention also relates to a system for installing a wind farm at an offshore site, not forming part of the claimed subject matter. The system comprises a fleet of feeder vessels; a hub port located remotely from offshore site, the hub port including equipment for loading wind turbine components onto the feeder vessels; a satellite port located closer to the offshore site than the hub port, the satellite port including quay space for docking the feeder vessels loaded with wind turbine components; and at least one of the above-described installation vessels for transporting the feeder vessels from the satellite port to the offshore site.

### Brief description of the drawings

The invention and its many advantages will be described in more detail below with reference to the accompanying schematic drawings which, for the purpose of illustration, show some non-limiting embodiments, and in which
Fig. 1 is a schematic view of a system for supporting the installation of offshore wind farm developments,
Fig. 2 is a schematic view of how the system of Fig. 1 could be used to support offshore wind farm developments in the United Kingdom,
Fig. 3 is a perspective of one embodiment of an installation vessel used in the system of Fig. 1,
Fig. 4 is a perspective of another embodiment of an installation vessel used in the system of Fig. 1, and
Figs. 5A-5E are schematic views illustrating a method of installing a wind farm at an offshore site.

All the drawings are schematic and not necessarily to scale, and they show only those parts which are necessary in order to elucidate the invention, other parts being omitted or merely suggested.

### Detailed Description

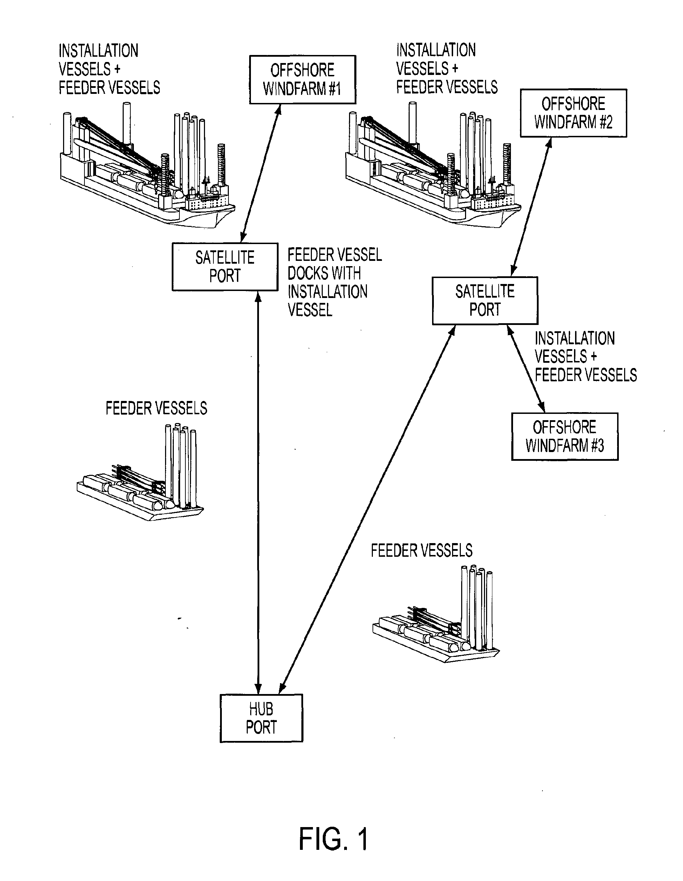

Fig. 1 illustrates a system 10 designed to address some of the challenges described above with respect to the installation of offshore wind farms. In general, rather than selecting a single pre-assembly port to support an offshore wind farm and having conventional installation vessels travel between the wind farm and port, the system provides two types of ports: hub ports and satellite ports. Feeder vessels transport wind turbine components from the hub ports to the satellite ports. The feeder vessels are then docked in specially-designed installation vessels and taken to the offshore site of the wind farm. This allows for a more efficient use of resources, as will be apparent from the description below.

In particular, major operations may be concentrated at the hub ports, which may support a number of wind farm developments, such that only minor operations need to be completed at the satellite ports, which may support a smaller number of (or individual) wind farm developments. The minor operations may even be limited to the exchange of feeder vessels with the installation vessels, if desired. The number of locations able to serve as satellite ports is greater than the number able to serve as conventional pre-assembly ports because of the reduced operations. As a result, the satellite ports can likely be located closer to wind farm developments so that the installation vessels spend less time in transit. Furthermore, the hub ports can be constructed with longer-term goals in mind, thereby justifying increased investment. They may even encompass manufacturing facilities for the wind turbine components in addition to assembly and storage quays.

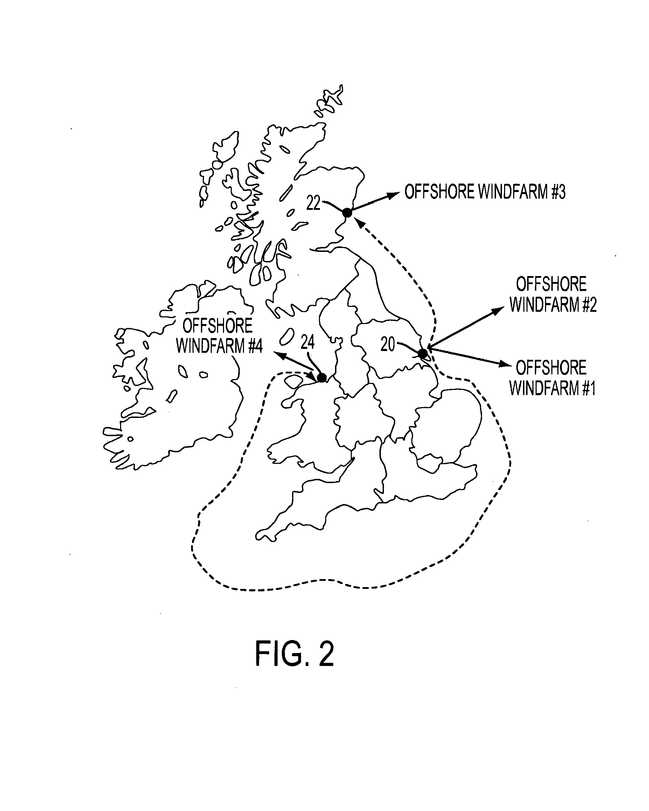

Fig. 2 illustrates one example of how the system might be used to support offshore wind farm developments in the United Kingdom. A hub port 20 is selected close to the largest concentration of wind farm developments, which is in the southern sector of the North Sea in this example. The hub port supports pre-assembly, and/or storage operations facilities and may include manufacturing facilities consistent with the description above. For wind farm developments less than approximately 500 km or two days of sailing away, satellite ports may not be required. The installation vessels for such wind farm developments may simply travel back-and-forth between the hub port and wind farms. Accordingly, conventional installation vessels might even be used instead of, or in addition to, the specially-designed installation vessels part of the system 10.

For wind farm developments further away, the use of installation vessels to cover transit distances is not very economical. Installation vessels are very expensive because they are designed to handle the complex operations required to erect wind turbines in difficult environments. Accordingly, for these wind farms, it is advantageous to establish satellite ports and make use of feeder vessels consistent with the description above. Fig. 2 shows one satellite port 22 to support wind farm developments off the east coast of Scotland and another satellite port 24 on the west coast of England to support wind farm developments in the Irish Sea. The feeder vessels bring pre-assembled wind turbine components to the satellite ports, where they are picked up by the installation vessels and taken to the site of the wind farm development. Therefore, the installation vessels remain close to the site so that they can spend more time on the installation operations for which they were designed. This also allows the installation vessels to take better advantage of windows where weather conditions are suitable for the installation operations. The longer transit distances to the satellite ports are handled by the feeder vessels, which may be barges or the like designed for such purposes. There may even be instances where the feeder vessels travel all the way to the offshore site without stopping at satellite ports. For example, if weather and sea conditions at the offshore site are suitable, the feeder vessels may travel to the offshore site and be docked in the installation vessels there instead of at the satellite ports.

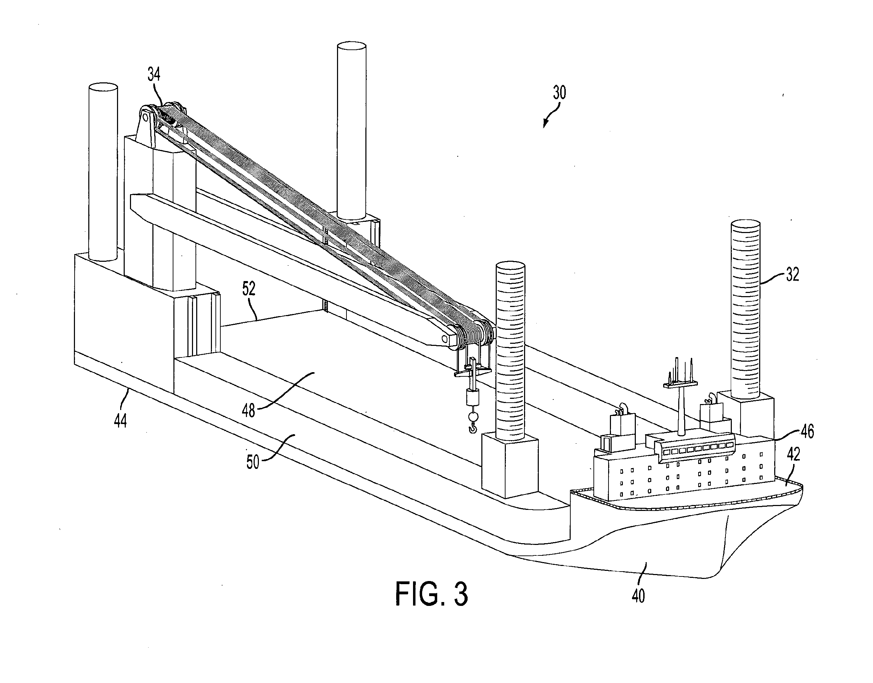

Fig. 3 illustrates one embodiment of an installation vessel 30 that makes the above-described system 10 possible. Consistent with conventional installation vessels, the installation vessel includes several jack-up legs 32 and one or more lift cranes 34. When deployed, the jack-up legs extend to the sea floor to stabilize the installation vessel at the offshore site. The installation vessel may even be elevated above the water after deploying the jack-up legs so that it is less affected by waves, etc. The lift crane is designed to assist in erecting wind turbines at the offshore site.

In addition to being a jack-up vessel, the installation vessel 30 is designed as a semi-submersible dock-type vessel for accommodating feeder vessels. In particular, the installation vessel includes a hull 40 supporting a raised, forward deck 42 and a lowered, rear deck 44. The forward deck may include cabins 46 for housing operating crew, wind turbine installation personnel, wind turbine commissioning personnel, and/or other personnel involved in offshore wind farm development. There may also be features to facilitate the transfer of the personnel, such as crew transfer vessels and helicopter landing pads, neither of which are shown in the figure. The rear deck is designed as a loading dock with a holding area 48 for receiving the feeder vessels. The holding area is bound by superstructure 50 on both sides of the installation vessel and may have a shape that generally corresponds to feeder vessels. However, the loading dock also includes an open end 52 to allow the feeder vessels to enter the holding area.

To dock a feeder vessel into the installation vessel, ballasting equipment (not shown) within the hull is controlled to lower the loading dock relative to the water. The feeder vessel may then be moved along the water (i.e., floated) through the open end and into the holding area, where it is eventually secured. The superstructure on the sides of the installation vessel help guide the feeder vessel during this docking process. More specifically, fenders (not shown) provided along the stern help "catch" the bow of a feeder vessel and guide it into the open end. Fenders (not shown) provided along the inner sides of the dock then guide the feeder vessel as it moves into the holding area. These fenders also help protect the installation vessel and feeder vessel. Furthermore, the sides of the installation vessel may comprise ballast tanks (i.e. side tanks) for improving stability and motions, e.g., during sailing.

Other features not shown in detail may be provided to further facilitate docking. For example, the installation vessel may include one or more winches at the forward end of the loading dock. These winches can be reeled out and attached to the feeder vessel at the beginning of the docking process. The winches can then be used to draw the feeder vessel into the holding area and maintain it in position until the docking process is complete. One or more latches provided on the installation vessel may also connect to the feeder vessel when it approaches the front of the loading dock. The latches may help draw the feeder vessel towards compliant buffers at the front of the loading dock and thereafter lock the feeder vessel in place. The final steps in the docking process involve controlling the ballasting equipment to raise the installation vessel (and, therefore, loading dock) relative to the water until the feeder vessel is no longer floating; it is supported by the installation instead. As a result, the feeder vessel is no longer subject to the actions of wind, current, and waves.

The feeder vessels may be barges designed for economical transport of components, as mentioned above. Those familiar with wind turbine transport by sea will appreciate that a number of different types of barges may be used as feeder vessels. For example, the feeder vessels may be "dumb barges", i.e. conventional flat barges towed by commercially-available tug boats. Alternatively, the feeder vessels may be self-propelled barges or part of a tug/barge system. The latter types of barges typically include a notched stern in which a special tug can be docked and connected to form a single vessel with improved stability and control. It is even possible that the feeder vessels will be transported by semi-submersible dock vessels, similar to those available from the Dockwise Group of Companies for improved sea keeping capabilities during longer transit distances (www.dockwise.com).

The feeder vessels include onboard facilities to allow for the components loaded thereon to be transported and briefly stored in a safe manner such that they do not suffer degradation or damage. This may include, for example, seafastening for all components, generators for electrical supplies, and other equipment/facilities to ensure that the wind turbine components are properly stored and do not suffer adverse effects due to cold weather, moisture, or the rotating components being stationary in one position for extended periods. In the shown embodiment, the wind turbine components, i.e. the nacelles, towers and wings, are stacked, however, in another not shown embodiment, the nacelles may be placed on the feeder vessel unstacked, and the towers may be loaded and placed vertically on the feeder vessel. The feeder vessels may also carry food supplies, potable water, and fuel to sustain the installation vessel offshore for extended periods without having to make port for re-supply.

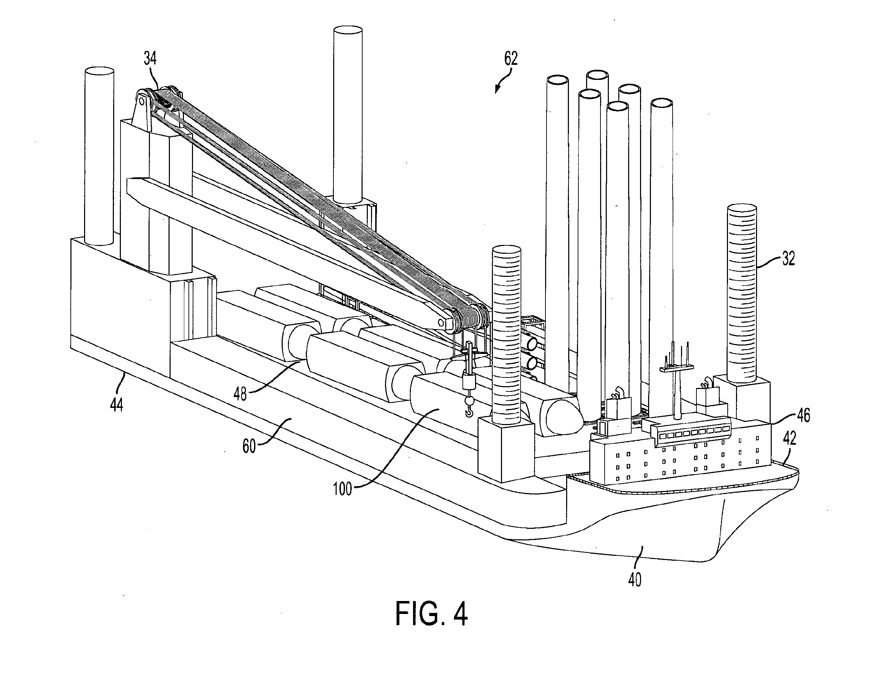

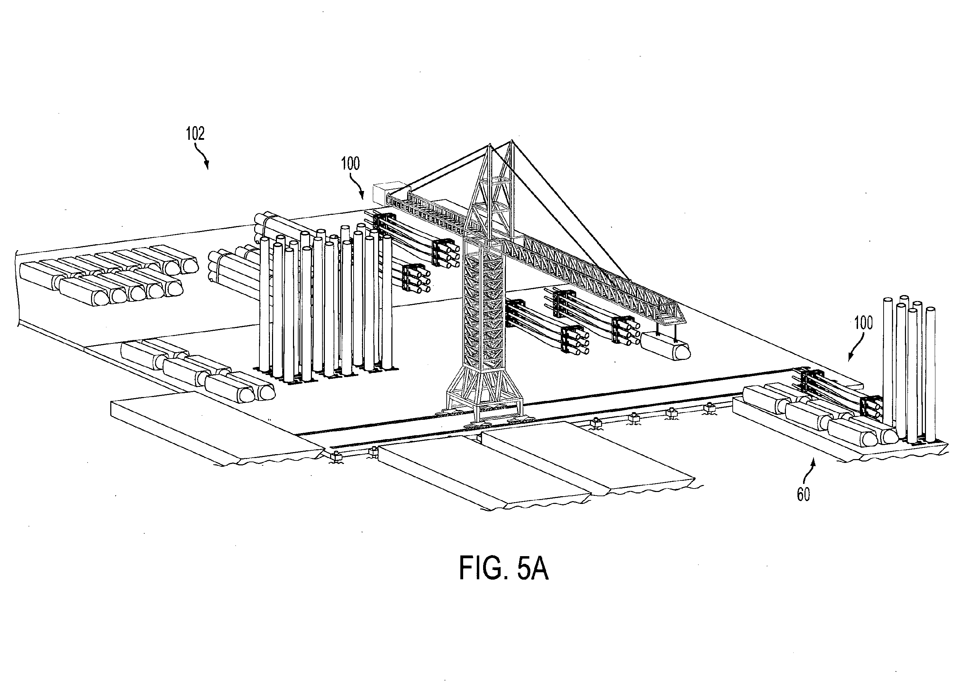

Fig. 4 illustrates one example of a feeder vessel 60 after it has been docked on an installation vessel 62. In this embodiment, the installation vessel 62 does not include superstructure along the sides of its rear deck. It still includes the same basic components as the installation vessel 30 (with the same reference numbers in the figures being used where appropriate), but the components are positioned so that the feeder vessel 60 can be floated onto the holding area of the loading dock through the open sides of the installation vessel 62. This can be better understood with reference to Figs. 5A-5E, which schematically illustrate a method of installing a wind farm at an offshore site consistent with the system and vessels described above.

The method begins with loading wind turbine components 100 onto feeder vessels 60 at a hub port 102, as shown in Fig. 5A. The wind turbine components are pre-assembled and ready for installation, and each feeder vessel may be loaded with enough components to erect multiple wind turbines. The preparation/pre-assembly of the components and their layout on the deck of the feeder vessels are completed with the eventual offshore installation in mind. Although Fig. 5A shows the feeder vessels being loaded with "cassettes" of wind turbine blades, hubs, tower sections, and nacelles, i.e. components eventually supported above water, the feeder vessels may also be loaded with components and equipment used during the other stages of offshore installation. This may include, for example: additional floating accommodation facilities, foundations, jackets, topsides, piling equipment, boat landing systems, etc. The wind turbine components may be prepared as much as possible at the hub port, including testing and commissioning, to minimize the work necessary to complete the installation offshore.

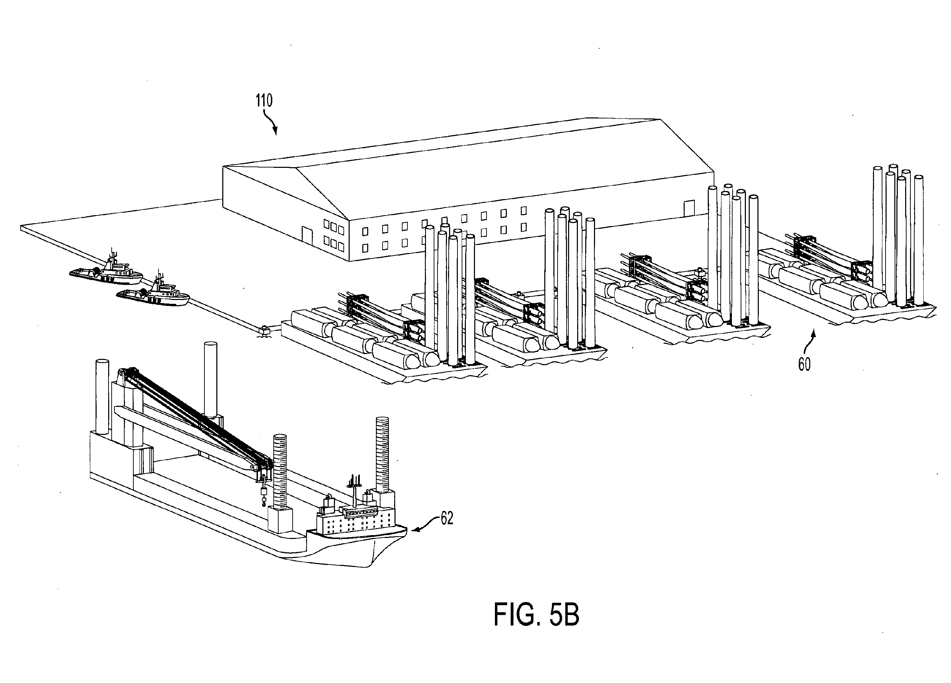

The feeder vessels then transport the wind turbine components to a satellite port 110, as shown in Fig. 5B. The satellite port may be relatively small compared to the hub port because space and equipment for pre-assembly operations is not needed, at least to the same extent. Indeed, all that may be needed is quay space for docking the feeder vessels and sheltered waters that facilitate docking and undocking the feeder vessels to one of the installation vessels. A number of loaded feeder vessels may be sent to the satellite port in advance of the offshore installation to create a stockpile locally.

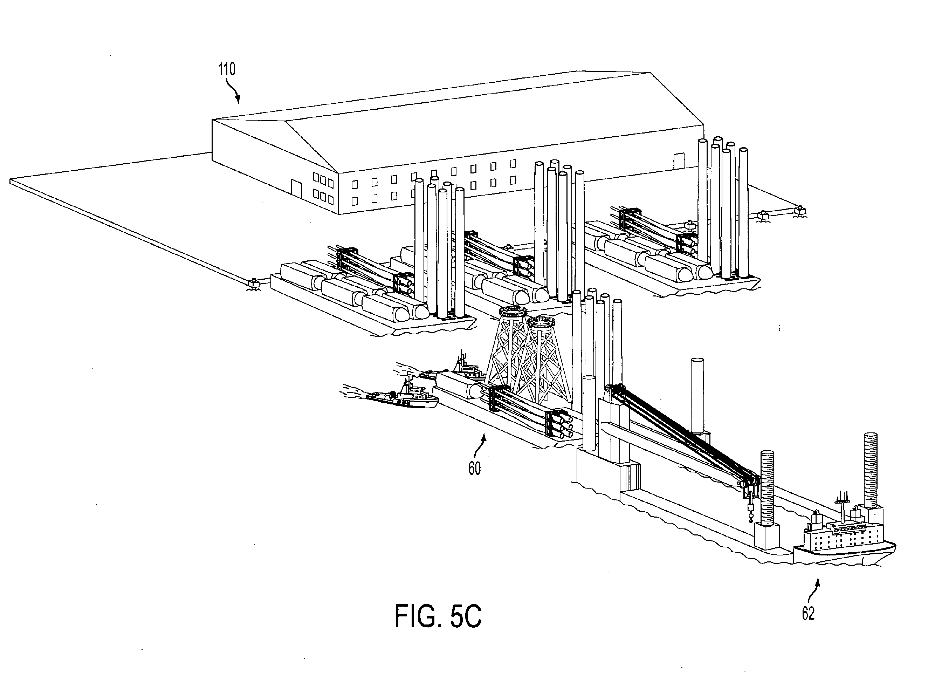

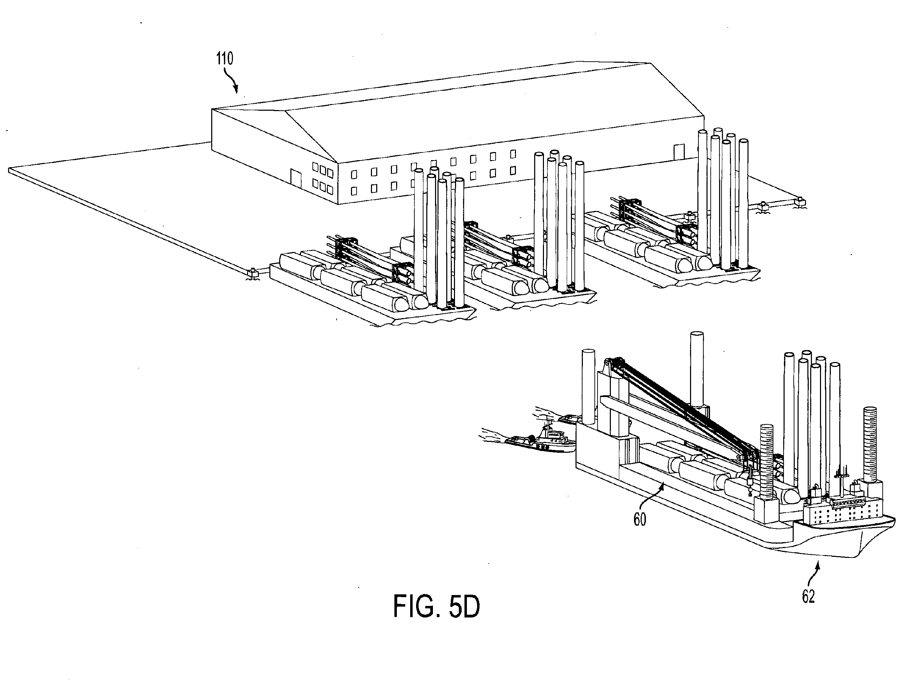

The docking process for one of the feeder vessels is shown in Figs. 5C and 5D. The installation vessel is lowered to submerge its rear deck, the feeder vessel is moved over the holding area, and then the installation vessel is raised to surface its rear deck and feeder vessel above the water. Again, this semi-submerging and surfacing may be accomplished by controlling ballasting equipment on the installation vessel. Tug boats are shown for moving the feeder vessel because in this embodiment the feeder vessel is a "dumb" barge. Despite the use of tug boats, the amount of handling required to load the installation vessel is minimal compared to conventional loading methods. The use of the feeder vessels enables the components to be transferred in bulk to the installation vessel instead of transferring them individually. Furthermore, this procedure is less-weather sensitive in that it can be carried out in rather poor conditions without damaging the wind turbine components. Furthermore, it is not necessary to perform lifting operations transferring components between floating vessels and static vessels.

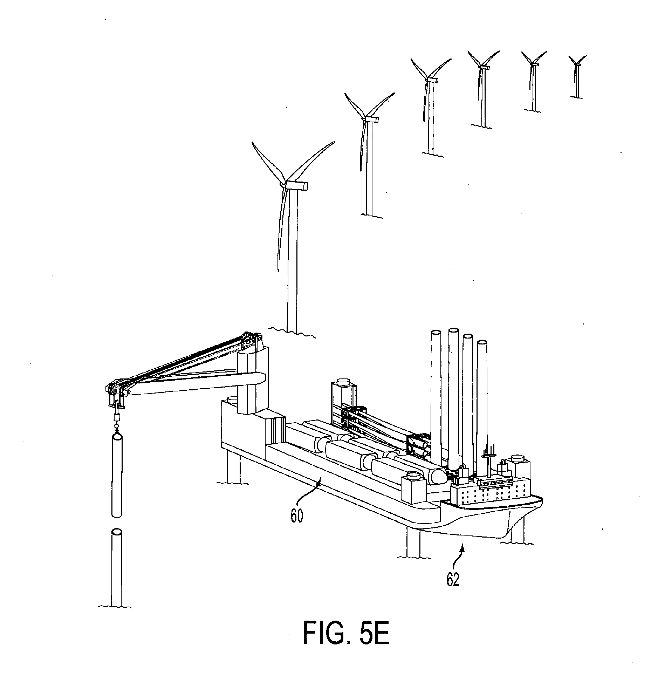

After docking the feeder vessel, both the installation vessel and feeder vessel are transported to the offshore site. The installation vessel may be self-propulsive such that the tug boats or other vessels are not required. Once at the site, the installation vessel deploys its jack-up legs to extend to the sea floor. The jack-up legs raise the installation vessel relative to the water so it is less affected by waves and becomes more stable. As shown in Fig. 5E, the lift crane and other equipment on the installation vessel are then used to erect a wind turbine from the components on the feeder vessel. The installation vessel may also be used as a conventional installation vessel by loading an empty feeder vessel which remains in situ to act as a conventional deck space where components can be loaded in the conventional way. Furthermore, the feeder vessel may have been loaded with enough components to fully or partially erect multiple wind turbines.

Advantageously, the wind turbine components are first loaded onto the feeder vessel in a manner that takes into account the equipment on the installation vessel. Indeed, the wind turbine components may be positioned on the feeder vessel in the same manner (e.g., deck layout, seafastening) in which they would be positioned on conventional installation vessels. Alternatively or additionally, the feeder vessel may include a transfer rail or skid system (not shown) to move the wind turbine components to desired positions relative to the lifting crane(s) on the installation vessel. This can be especially advantageous when the lifting crane has a limited radius that does extend over the entire feeder vessel, as the carrying capacity of the feeder vessel can still be maximized. Such transfer systems may also allow environmentally-sensitive wind turbine components to be moved under/into sheltered storage areas provided on the installation vessel (e.g., between the front and rear decks). If located within the radius of the lifting crane(s), these areas may include hatches through which the crane can lift the components when the hatches are opened.

Although the feeder vessels are described above as remaining docked to the installation vessels when erecting wind turbines at the offshore site, the installation vessels may be semi-submerged at the site to undock the feeder vessels if desired. This may be advantageous if there are multiple installation vessels being used at a site and components from other feeder vessels are desired at the location of the other installation vessels.

After installing the wind turbine components from the feeder vessel, the installation vessel travels back to the satellite port with the empty feeder vessel. The installation vessel is then semi-submerged so that the feeder vessel can be released (i.e., moved off of its loading dock). At this point, a different feeder vessel may be docked to the installation vessel so that the installation of the offshore wind farm may continue.

The relatively quick exchange of feeder vessels at the satellite port enables the method to significantly reduce or eliminate time-consuming aspects associated with conventional methods. For example, conventional installation vessels must typically visit a port, demobilize one spread of equipment (e.g., remove equipment and seafastening), and remobilize with another spread equipment when performing different work scopes. In the system and method described above, the feeder vessels may already be mobilized for the different work scopes associated with the installation of offshore wind farms. Thus, the need for an extended stay in a port to mobilize and de-mobilize the installation vessel is eliminated. Many different feeder vessels may be prepared for different work scopes, making it easy for the installation vessels to swap tasks many times, perhaps to fit in with delivery schedules or to accommodate delays. It may also be the case that the wind farm is developed in sectors, requiring completion of parts of the wind farm at different times, so the installation vessel is flexible.

Advantages like these, along with additional examples and modifications, will be apparent based on the description above. Indeed, the embodiments described above are merely one example of the invention defined by the claims that appear below.

## Claims

1. A method of installing a wind farm at an offshore site, comprising:
loading wind turbine components onto feeder vessels (60) at a hub port (20,102);
transporting the feeder vessels (60) loaded with the wind turbine components to a satellite port (22,24,102);
docking a first one of the feeder vessels (60) within a holding area on an installation vessel (30,62) at the satellite port;
transporting the installation vessel (30,62) and the first feeder vessel to the offshore site; and
using the installation vessel (30,62) to at least partially erect one or more wind turbines from the wind turbine components on the first feeder vessel (60)at the offshore site, wherein the first feeder vessel (60) remains docked within the installation vessel (30,62) at the offshore site when erecting the one or more wind turbines.

2. A method according to claim 1, wherein loading wind turbine components onto feeder vessels (60) comprises:
laying out wind turbine blades, nacelles, and tower sections on a deck of the first feeder vessel, wherein the layout facilitates access by equipment on the installation vessel (30,62).

3. A method according to claim 1 or 2, further comprising:
transporting the installation vessel (30,62) and first feeder vessel (60) from the offshore site back to the satellite port without the wind turbine components on the first feeder vessel;
releasing the first feeder vessel from the installation vessel at the satellite port;
docking a second one of feeder vessels into the installation vessel at the satellite port;
transporting the installation vessel (30,62) and second feeder vessel to the offshore site; and
using the installation vessel to continue erecting the one or more wind turbines at the offshore site, now from the wind turbine components on the second feeder vessel.

4. A method according to claim 3, wherein the first feeder vessel is mobilized with equipment and wind turbine components for a first work scope and the second feeder is mobilized with equipment and wind turbine components for a second work scope different than the first work scope.

5. A method according to any of the preceding claims, wherein using the installation vessel (30,62) to erect one or more wind turbines further comprises:
deploying jack-up legs (32) on the installation vessel at the offshore site to raise the installation vessel relative to the water.

6. A method according to any of the preceding claims, wherein the installation vessel (30,62) includes at least one lift crane (34) for handling the wind turbine components to erect the one or more wind turbines.

7. A method according to any of the preceding claims, wherein the installation vessel (30,62) is self-propulsive.

8. A method according to any of the preceding claims, wherein the installation vessel (30,62) is semi-submersible.

9. A method according to claim 7, wherein docking the first feeder vessel (60) to the installation vessel further comprises
controlling ballasting equipment on the installation vessel to lower a loading dock of the installation vessel relative to the water;
moving the first feeder vessel along the water over the loading dock of the installation vessel, the loading dock having an open end (52); and
securing the first feeder vessel within a holding area (48) defined by the loading dock.

10. A method according to claim 9, wherein moving the first feeder vessel (60) into the loading dock further comprises:
connecting one or more winches on the installation vessel to the first feeder vessel; and
drawing the first feeder vessel into the holding area (48) of the loading dock.

11. A method according to claim 9 or 10, further comprising:
controlling the ballasting equipment on the installation vessel to raise the loading dock and first feeder vessel relative to the water.

12. A method according to any of the preceding claims, wherein the feeder vessels (60) are one of the following: flat top barges, dumb barges, tug barges or self-propelled barges, or are transported by semi-submersible dock vessels or any other type of vessel which could act as a feeder vessel.

13. A method according to any of the preceding claims, wherein loading the wind turbine components onto the feeder vessels further comprises:
loading cassettes of the wind turbine components or pre-assembled wind turbines onto the feeder vessels (60).

14. A method according to any of the preceding claims, further comprising:
transferring personnel to and from the installation vessel (30,62) while the installation vessel is at the offshore site, wherein the installation vessel is equipped with crew transfer vessels and/or a helicopter landing pad to facilitate this transfer.

15. A method of installing a wind farms at multiple offshore sites, comprising:
loading wind turbine components onto feeder vessels (60) at a hub port;
transporting a first group of the feeder vessels (60) to a first satellite port (22,24,110) after they have been loaded with wind turbine components;
installing a first wind farm at a first offshore site by performing the method of claim 1, wherein the steps of claim 1 are repeated with other feeder vessels from the first group of feeder vessels to complete installation of the first wind farm;
transporting a second group of the feeder vessels to a second satellite port (22,24,110) after they have been loaded with wind turbine components, the second satellite port being located closer to the second offshore site compared the first satellite port; and
installing a second wind farm at the second offshore site by performing the method of claim 1 with a second installation vessel and the second group of feeder vessels.

## Patentansprüche

1. Verfahren zum Installieren eines Windparks an einem Offshore-Standort, welches Folgendes umfasst:
Laden von Windturbinenkomponenten auf Feederschiffe (60) in einem Umschlaghafen (20, 102);
Transportieren der Feederschiffe (60) beladen mit den Windturbinenkomponenten zu einem Satellitenhafen (22, 24, 102);
Andocken eines ersten der Feederschiffe (60) innerhalb eines Wartebereiches an einem Installationsschiff (30, 62) in dem Satellitenhafen;
Transportieren des Installationsschiffes (30, 62) und des ersten Feederschiffes zu dem Offshore-Standort; und
Verwenden des Installationsschiffes (30, 62) zum zumindest teilweisen Errichten einer oder mehrerer Windturbinen aus den Windturbinenkomponenten auf dem ersten Feederschiff (60) an dem Offshore-Standort, wobei das erste Feederschiff (60) beim Errichten der einen oder mehreren Windturbinen innerhalb des Installationsschiffes (30, 62) an dem Offshore-Standort angedockt bleibt.

2. Verfahren nach Anspruch 1, wobei das Laden von Windturbinenkomponenten auf Feederschiffe (60) Folgendes umfasst:
Auslegen von Windturbinenblättern, Gondeln und Turmabschnitten auf einem Deck des ersten Feederschiffes, wobei das Auslegen den Zugang durch Ausrüstung auf dem Installationsschiff (30, 62) vereinfacht.

3. Verfahren nach Anspruch 1 oder 2, welches ferner Folgendes umfasst:
Transportieren des Installationsschiffes (30, 62) und des ersten Feederschiffes (60) von dem Offshore-Standort zurück zu dem Satellitenhafen ohne die Windturbinenkomponenten auf dem ersten Feederschiff;
Freigeben des ersten Feederschiffes von dem Installationsschiff in dem Satellitenhafen;
Andocken eines zweiten der Feederschiffe an das Installationsschiff in dem Satellitenhafen;
Transportieren des Installationsschiffes (30, 62) und
des zweiten Feederschiffes zu dem Offshore-Standort;
und
Verwenden des Installationsschiffes zum Fortsetzen der Errichtung der einen oder mehreren Windturbinen an dem Offshore-Standort, nun aus den Windturbinenkomponenten auf dem zweiten Feederschiff.

4. Verfahren nach Anspruch 3, wobei das erste Feederschiff mit Ausrüstung und Windturbinenkomponenten für einen ersten Arbeitsumfang mobilisiert wird und das zweite Feederschiff mit Ausrüstung und Windturbinenkomponenten für einen zweiten Arbeitsumfang mobilisiert wird, der sich vom ersten Arbeitsumfang unterscheidet.

5. Verfahren nach einem der vorhergehenden Ansprüche, wobei das Verwenden des Installationsschiffes (30, 62) zum Errichten einer oder mehrerer Windturbinen ferner Folgendes umfasst:
Einsetzen von Hubbeinen (32) auf dem Installationsschiff an dem Offshore-Standort zum Anheben des Installationsschiffes relativ zum Wasser.

6. Verfahren nach einem der vorhergehenden Ansprüche, wobei das Installationsschiff (30, 62) mindestens einen Hebekran (34) zum Handhaben der Windturbinenkomponenten zum Errichten der einen oder mehreren Windturbinen beinhaltet.

7. Verfahren nach einem der vorhergehenden Ansprüche, wobei das Installationsschiff (30, 62) selbsttreibend ist.

8. Verfahren nach einem der vorhergehenden Ansprüche, wobei das Installationsschiff (30, 62) halbtauchfähig ist.

9. Verfahren nach Anspruch 7, wobei das Andocken des ersten Feederschiffes (60) an das Installationsschiff ferner Folgendes umfasst:
Steuern von Ballastausrüstung auf dem Installationsschiff zum Absenken eines Ladedocks des Installationsschiffes relativ zum Wasser;
Bewegen des ersten Feederschiffes entlang des Wassers über das Ladedock des Installationsschiffes, wobei das Ladedock ein offenes Ende (52) aufweist; und
Sichern des ersten Feederschiffes innerhalb eines Wartebereiches (48), der durch das Ladedock definiert ist.

10. Verfahren nach Anspruch 9, wobei das Bewegen des ersten Feederschiffes (60) in das Ladedock ferner Folgendes umfasst:
Verbinden einer oder mehrerer Winden auf dem Installationsschiff mit dem ersten Feederschiff; und
Ziehen des ersten Feederschiffes in den Wartebereich (48) des Ladedocks.

11. Verfahren nach Anspruch 9 oder 10, welches ferner Folgendes umfasst:
Steuern der Ballastausrüstung auf dem Installationsschiff zum Anheben des Ladedocks und des ersten Feederschiffes relativ zum Wasser.

12. Verfahren nach einem der vorhergehenden Ansprüche, wobei die Feederschiffe (60) eines der Folgenden sind: flache Lastkähne, Schuten, Schleppkähne oder selbstfahrende Kähne, oder von halbtauchfähigen Dockschiffen oder einer anderen Art Schiff, welches als ein Feederschiff dienen könnte, transportiert werden.

13. Verfahren nach einem der vorhergehenden Ansprüche, wobei das Laden der Windturbinenkomponenten auf die Feederschiffe ferner Folgendes umfasst:
Laden von Kassetten der Windturbinenkomponenten oder vormontierter Windturbinen auf die Feederschiffe (60).

14. Verfahren nach einem der vorhergehenden Ansprüche, welches ferner Folgendes umfasst:
Umsetzen von Personal auf das und von dem Installationsschiff (30, 62), während sich das Installationsschiff am Offshore-Standort befindet, wobei das Installationsschiff mit Besatzungsumsetzschiffen und/oder einem Hubschrauberlandeplatz zum Vereinfachen dieser Umsetzung ausgestattet ist.

15. Verfahren zum Installieren von Windparks an mehreren Offshore-Standorten, welches Folgendes umfasst:
Laden von Windturbinenkomponenten auf Feederschiffe (60) in einem Umschlaghafen;
Transportieren einer ersten Gruppe der Feederschiffe (60) zu einem ersten Satellitenhafen (22, 24, 110), nachdem sie mit Windturbinenkomponenten beladen wurden;
Installieren eines ersten Windparks an einem ersten Offshore-Standort durch Durchführung des Verfahrens nach Anspruch 1, wobei die Schritte von Anspruch 1 mit anderen Feederschiffen aus der ersten Gruppe von Feederschiffen wiederholt werden, um die Installation des ersten Windparks abzuschließen;
Transportieren einer zweiten Gruppe der Feederschiffe zu einem zweiten Satellitenhafen (22, 24, 110),
nachdem sie mit Windturbinenkomponenten beladen wurden, wobei sich der zweite Satellitenhafen im Vergleich zum ersten Satellitenhafen näher am zweiten Offshore-Standort befindet; und
Installieren eines zweiten Windparks am zweiten Offshore-Standort durch Durchführung des Verfahrens von Anspruch 1 mit einem zweiten Installationsschiff und der zweiten Gruppe von Feederschiffen.

## Revendications

1. Procédé d'installation d'un parc d'éoliennes au niveau d'un site au large des côtes, comprenant :
le chargement de composants d'éolienne sur des navires de collecte (60) au niveau d'une plate-forme portuaire (20, 102) ;
le transport des navires de collecte (60) chargés des composants d'éolienne jusqu'à un port satellite (22, 24, 102) ;
l'amarrage d'un premier des navires de collecte (60) dans une zone d'attente à un navire d'installation (30, 62) au niveau du port satellite ;
le transport du navire d'installation (30, 62) et du premier navire de collecte jusqu'au site au large des côtes ; et
l'utilisation du navire d'installation (30, 62) pour ériger au moins partiellement une ou plusieurs éoliennes à partir des composants d'éolienne sur le premier navire de collecte (60) au niveau du site au large des côtes, dans lequel le premier navire de collecte (60) reste amarré au navire d'installation (30, 62) au niveau du site au large des côtes lors de l'érection de la ou des plusieurs éoliennes.

2. Procédé selon la revendication 1, dans lequel le chargement de composants d'éolienne sur des navires de collecte (60) comprend :
l'agencement de pales d'éolienne, de nacelles et de sections de mât sur un pont du premier navire de collecte, dans lequel l'agencement facilite l'accès par un équipement sur le navire d'installation (30, 62).

3. Procédé selon la revendication 1 ou 2, comprenant en outre :
Le transport du navire d'installation (30, 62) et du premier navire de collecte (60) depuis le site au large des côtes en retour jusqu'au port satellite sans les composants d'éolienne sur le premier navire de collecte ;
le détachement du premier navire de collecte du navire d'installation au niveau du port satellite ;
l'amarrage d'un second des navires de collecte au navire d'installation au niveau du port satellite ;
le transport du navire d'installation (30, 62) et du second navire de collecte jusqu'au site au large des côtes ; et
l'utilisation du navire d'installation pour continuer à ériger la ou les plusieurs éoliennes au niveau du site au large des côtes, maintenant à partir des composants d'éolienne sur le deuxième navire de collecte.

4. Procédé selon la revendication 3, dans lequel le premier navire de collecte est mobilisé avec un équipement et des composants d'éolienne pour une première étendue de travaux et le second navire de collecte est mobilisé avec un équipement et des composants d'éolienne pour une seconde étendue de travaux différente de la première étendue de travaux.

5. Procédé selon l'une quelconque des revendications précédentes, dans lequel l'utilisation du navire d'installation (30, 62) pour ériger une ou plusieurs éoliennes comprend en outre :
le déploiement de montants auto-élévateurs (32) sur le navire d'installation au niveau du site au large des côtes pour élever le navire d'installation par rapport à l'eau.

6. Procédé selon l'une quelconque des revendications précédentes, dans lequel le navire d'installation (30, 62) inclut au moins une grue de levage (34) pour manipuler les composants d'éolienne pour ériger la ou les plusieurs éoliennes.

7. Procédé selon l'une quelconque des revendications précédentes, dans lequel le navire d'installation (30, 62) est auto-propulseur.

8. Procédé selon l'une quelconque des revendications précédentes, dans lequel le navire d'installation (30, 62) est semi-submersible.

9. Procédé selon la revendication 7, dans lequel l'amarrage du premier navire de collecte (60) au navire d'installation comprend en outre
la commande d'un équipement de ballastage sur le navire d'installation pour abaisser une passerelle de chargement du navire d'installation par rapport à l'eau ;
le déplacement du premier navire de collecte le long de l'eau sur la passerelle de chargement du navire d'installation, la passerelle de chargement ayant une extrémité ouverte (52) ; et
immobilisation du premier navire de collecte à l'intérieur d'une zone d'attente (48) définie par la passerelle de chargement.

10. Procédé selon la revendication 9, dans lequel le déplacement du premier navire de collecte (60) dans la passerelle de chargement comprend en outre :
la connexion d'un ou plusieurs treuils sur le navire d'installation au premier navire de collecte ; et
le tirage du premier navire de collecte dans la zone d'attente (48) de la passerelle de chargement.

11. Procédé selon la revendication 9 ou 10, comprenant en outre :
la commande de l'équipement de ballastage sur le navire d'installation pour élever la passerelle de chargement et le premier navire de collecte par rapport à l'eau.

12. Procédé selon l'une quelconque des revendications précédentes, dans lequel les navires de collecte (60) sont un de ce qui suit : des chalands à pont plat, des chalands sans moteur, des chalands remorqueurs ou des chalands autopropulsés, ou sont transportés par des navires à passerelle semi-submersible ou tout autre type de navire qui pourrait agir comme un navire de collecte.

13. Procédé selon l'une quelconque des revendications précédentes, dans lequel le chargement de composants d'éolienne sur les navires de collecte comprend en outre :
le chargement de coffres des composants d'éolienne ou d'éoliennes assemblées à l'avance sur les navires de collecte (60).

14. Procédé selon l'une quelconque des revendications précédentes, comprenant en outre :
le transfert de personnel vers et en provenance du navire d'installation (30, 62) tandis que le navire d'installation est au niveau du site au large des côtes, dans lequel le navire d'installation est équipé de navires de transfert d'équipage et/ou d'une plate-forme d'atterrissage d'hélicoptère pour faciliter ce transfert.

15. Procédé d'installation de parcs d'éoliennes au niveau de multiples sites au large des côtes, comprenant :
le chargement de composants d'éolienne sur des navires de collecte (60) au niveau d'une plate-forme portuaire ;
le transport d'un premier groupe de navires de collecte (60) jusqu'à un premier port satellite (22, 24, 110) après qu'ils ont été chargés de composants d'éolienne ;
l'installation d'un premier parc d'éoliennes au niveau d'un premier site au large des côtes en effectuant le procédé selon la revendication 1, dans lequel les étapes de la revendication 1 sont répétées avec d'autres navires de collecte provenant du premier groupe de navires de collecte pour achever l'installation du premier parc d'éoliennes ;
le transport d'un second groupe de navires de collecte jusqu'à un second port satellite (22, 24, 110) après qu'ils ont été chargés de composants d'éolienne, le second port satellite étant situé plus près du second site au large des côtes en comparaison au premier port satellite ; et
l'installation d'un second parc d'éoliennes au niveau du second site au large des côtes en effectuant le procédé selon la revendication 1 avec un second navire d'installation et le second groupe de navires de collecte.
